# EUROPÄISCHE PATENTANMELDUNG

(11) **EP 4 494 951 A1**
(43) Veröffentlichungstag der Anmeldung: **22.01.2025**
(21) Anmeldenummer: 24189067.2
(22) Anmeldetag: 17.07.2024
(51) Int. Cl.: B60T 1/00, B60T 7/20, B60T 13/26, B60T 13/66, B60T 13/68, B60T 17/22

(54) **BREMSSYSTEM FÜR EIN ZUGFAHRZEUG**

(30) Priorität: 21.07.2023 DE 102023206955
(71) Anmelder: ZF CV Systems Global GmbH, 3006 Bern (CH)
(72) Erfinder: Brutt, Mirko, 31832 Springe (DE); Haverkamp, Michael, 30455 Hannover (DE); Spremberg, Jan, 30974 Wennigsen (DE)
(74) Vertreter: ZF Friedrichshafen AG

(57) **Zusammenfassung**

Die Erfindung betrifft ein Bremssystem (1) für ein Zugfahrzeug (2). Das Bremssystem (1) umfasst eine Druckmittelquelle (9) zur Bevorratung von unter Druck stehendem Druckmittel, ein Feststellbremsmodul (5) mit einem Steuerventil (6) und einem Redundanzventil (7), ein Anhängersteuerventilsystem (16) für eine Anhängerbremse (3) eines Anhängefahrzeugs (4), welches von dem Zugfahrzeug (2) gezogen wird, und eine elektronische Steuerungseinheit (25). Die elektronische Steuerungseinheit (25) ist insbesondere dazu eingerichtet, das Anhängersteuerventilsystem (16) derart zu steuern, dass Druckmittel über das Anhängersteuerventilsystem (16) in eine drucklose Umgebung (U) entweicht, wodurch die Druckmittelquelle (9) entleert wird, wenn das Steuerventil (6) oder das Redundanzventil (7) aufgrund eines mechanischen Defekts in einem geöffneten Zustand verharrt, obwohl es sich in einem geschlossenen Zustand befinden sollte, und wenn eine Zündung des Zugfahrzeugs (2) und damit auch ein Kompressor (9.1) zur Befüllung der Druckmittelquelle (9) ausgeschaltet sind.

## Beschreibung

Die Erfindung betrifft ein Bremssystem für ein Zugfahrzeug. Ein weiterer Anspruch ist auf ein Verfahren zur Steuerung des Bremssystems gerichtet.

Aus der EP 3 365 207 B1 ist ein angetriebenes Fahrzeug mit einer federbetätigten, hydraulisch öffnenden (SAHR) Fahrzeugbremse bekannt, die ein erstes und ein zweites Bremselement umfasst, die miteinander in Eingriff bringbar sind, wobei das Erste davon einen Teil eines drehbaren Elements des Antriebsstrangs des Fahrzeugs bildet oder an diesem befestigt ist und das Zweite davon drehfest und beweglich am Fahrzeug angebracht ist, sodass das erste und das zweite Element miteinander in Eingriff bringbar und voneinander trennbar sind. Dabei bewirkt ein gegenseitiger Eingriff der Bremselemente ein Bremsen der Drehung des drehbaren Elements, wobei die SAHR-Fahrzeugbremse (i) ein elastisch verformbares Element umfasst, das auf das zweite Bremselement wirkt, um das erste und das zweite Bremselement in gegenseitigen Eingriff zu zwingen, und (ii) einen hydraulischen Steuerkreis zum Aufbringen eines Hydraulikdrucks auf das zweite Bremselement umfasst, um der Wirkung des elastisch verformbaren Elements entgegenzuwirken und dadurch das erste und zweite Bremselement normalerweise getrennt voneinander zu halten, wobei das Fahrzeug ein hydraulisches Entlastungsventil umfasst, das zwischen einer Einweg-Ventilkonfiguration, die das Aufbringen von Druck auf das zweite Bremselement ermöglicht und eine Druckentlastung desselben verhindert, und einer Druckminderungskonfiguration verstellbar ist, die eine bidirektionale Strömung von Hydraulikfluid mittels des hydraulischen Entlastungsventils bereitstellt. Dabei umfasst das hydraulische Entlastungsventil ein Vorspannelement und ist dadurch gekennzeichnet, dass das hydraulische Entlastungsventil Teil einer nicht elektrischen Ausfallsicherung des Fahrzeug ist, in der die Einweg-Ventilkonfiguration wirksam ist, wenn ein Fahrmodus des Fahrzeugs gewählt ist und das Vorspannelement das hydraulische Entlastungsventil in die Einweg-Ventilkonfiguration vorspannt.

Eine Aufgabe der vorliegenden Erfindung kann darin gesehen werden, ein Bremssystem mit niedriger Hardware- und Software-Komplexität bereitzustellen. Dabei soll das Bremssystem bei einem unbeabsichtigt verklemmten Ventil sicherstellen, dass eine Parksperre aktiviert werden kann. Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Grundsätzlich liegt der vorliegenden Erfindung liegt die Idee zugrunde, den Druck im Kreislauf der Feststellbremsanlage zu reduzieren. Insbesondere ist dabei für ein Feststellbremssystem eine direkte Verbindung zwischen dem Vorratsbehälter bzw. der Druckmittelquelle, dem Feststellbremssystem und dem Anhängersteuerungssystem vorgesehen. Um den Druckabbau des Vorratsbehälters zu unterstützen, schneller auf die Bremsanforderung des Fahrers zu reagieren und zusätzliche Komponenten im Innenraum des Zugfahrzeugs zu vermeiden, schlägt die vorliegende Erfindung vor, das Anhängersteuerventil zu nutzen. Zusätzlich oder alternativ kann auch ein Bremsventil zur Steuerung der Feststellbremse des Zugfahrzeugs zyklisch aktiviert werden, um den Druck in der Versorgungsleitung des Feststellbremssystems zu reduzieren. Dadurch erreicht der Druck in den Bremszylindern einen unteren Grenzwert, sodass die verwendeten Federbremszylinder die Feststellbremsanlage betätigen können.

In diesem Sinne wird gemäß einem ersten Aspekt der Erfindung ein Bremssystem für ein Zugfahrzeug bereitgestellt. Das Bremssystem umfasst eine Druckmittelquelle zur Bevorratung von unter Druck stehendem Druckmittel. Die Druckmittelquelle (z.B. ein Tank oder ein Akkumulator) ist dazu eingerichtet, das bevorratete Druckmittel auszugeben, um Bremszylinder des Zugfahrzeugs und/oder eines von dem Zugfahrzeug gezogenen Anhängefahrzeugs zu betätigen. Wenn die Zündung des Zugfahrzeugs eingeschaltet ist, kann ein Antriebsmotor des Zugfahrzeugs eine Befüllung der Druckmittelquelle bewirken, z.B. indem ein Kompressor angetrieben wird, der Luft ansaugt, verdichtet und der Druckmittelquelle zuführt. Bei dem Druckmittel kann es sich um ein pneumatisches Druckmittel (z.B. Druckluft) oder um ein hydraulisches Druckmittel (z.B. Öl) handeln. Somit kann es sich bei dem Bremssystem ebenfalls um ein pneumatisches oder um ein hydraulisches Bremssystem handeln. Das Bremssystem umfasst weiterhin ein Feststellbremsmodul mit einem Steuerventil und - optional - mit einem Redundanzventil. Ferner umfasst das Bremssystem ein Anhängersteuerventilsystem für eine Anhängerbremse eines Anhängefahrzeugs, welches von dem Zugfahrzeug gezogen wird, und eine elektronische Steuerungseinheit. Im Folgenden wird die Erfindung bezüglich der Ausführungsform mit einem Steuerventil und dem optionalen Redundanzventil beschrieben. Die Ausführungen gelten sinngemäß jedoch auch für eine Ausführungsform, welche lediglich das Steuerventil und kein Redundanzventil aufweist.

Das Steuerventil und das Redundanzventil sind in einem geschlossenen Zustand mechanisch vorgespannt. In einem Normalbetrieb ist die elektronische Steuerungseinheit dazu eingerichtet ist, das Steuerventil und das Redundanzventil derart zu steuern, dass sie sich entgegen der mechanischen Vorspannung in einen geöffneten Zustand begeben. Dadurch wird Druckmittel aus der Druckmittelquelle in wenigstens einen Bremszylinder des Zugfahrzeugs geleitet wird, um in dem Bremszylinder einen Deaktivierungsdruck aufzubauen, sodass eine Parksperre des Zugfahrzeugs deaktiviert wird.

Wenn das Steuerventil oder das Redundanzventil in dem geöffneten Zustand verklemmt sind und die Parksperre eingelegt werden soll, dann wird dem Bremszylinder weiterhin Druckmittel zugeführt, sodass der Druck innerhalb des Bremszylinders nicht abgebaut und die Parksperre nicht eingelegt werden kann. Um diesem kritischen Zustand entgegenzuwirken, ist erfindungsgemäß vorgesehen, dass Druckmittel über das Anhängersteuerventilsystem in eine drucklose Umgebung abgelassen wird, sodass die Druckmittelquelle derart entleert wird, dass darin enthaltenes Druckmittel nicht mehr ausreicht, um die Feststellbremse zu deaktivieren. In diesem Sinne ist die elektronische Steuerungseinheit dazu eingerichtet, das Anhängersteuerventilsystem derart zu steuern, dass Druckmittel über das Anhängersteuerventilsystem in eine drucklose Umgebung entweicht, wodurch die Druckmittelquelle entleert wird, wenn das Steuerventil oder das Redundanzventil aufgrund eines mechanischen Defekts in dem geöffneten Zustand verharrt, obwohl es sich in dem geschlossenen Zustand befinden sollte, und wenn eine Zündung des Zugfahrzeugs und damit auch ein Kompressor zur Befüllung der Druckmittelquelle ausgeschaltet sind.

Um den Druck innerhalb der Druckmittelquelle abzubauen, kann die elektronische Steuerungseinheit dazu eingerichtet sein, das Anhängersteuerventilsystem derart zu steuern, dass ein Bremsdruckausgang für eine Anhängersteuerleitung, welche die Anhängerbremse mit Druckmittel versorgt, mit Unterbrechungen mit Druck beaufschlagt wird. Weiterhin kann die Anhängersteuerleitung mit dem Bremsdruckausgang und mit der Anhängerbremse verbunden sein, wobei die elektronische Steuerungseinheit dazu eingerichtet ist, das Anhängersteuerventilsystem derart zu steuern, dass die Anhängerbremse abwechselnd aktiviert und deaktiviert wird, um die Druckmittelquelle über das Anhängersteuerventilsystem (16) zu entleeren. Wenn der Bremsdruckausgang für die Anhängersteuerleitung mit Druck beaufschlagt wird, dann wird die Anhängerbremse aktiviert, sodass wenigstens ein Rad des Anhängers festgestellt wird. Wenn der Bremsdruckausgang für die Anhängersteuerleitung nicht mit Druck beaufschlagt wird (also während einer der Unterbrechungen der Druckbeaufschlagung des Bremsdruckausgangs), dann wird die Anhängerbremse deaktiviert, sodass das wenigstens eine Rad des Anhängers nicht festgestellt wird.

Das Anhängersteuerventilsystem kann ein Einlassventil, ein Auslassventil und ein Anhängefahrzeug-Relaisventil umfassen, wobei die Druckmittelquelle mit dem Einlassventil und mit dem Anhängefahrzeug-Relaisventil verbunden ist. Das Einlassventil kann in einem geschlossenen Zustand mechanisch vorgespannt sein. Das Einlassventil kann weiterhin als ein elektromagnetisch gesteuertes Proportional-Wegeventil ausgeführt sein. Dies ist jedoch rein beispielhaft und nicht zwingend. Alternativ kann das Einlassventil beispielsweise auch als ein einfaches Wegeventil ausgeführt sein, welches in den geschlossenen Zustand und in einen geöffneten Zustand versetzt werden kann. Das Auslassventil kann in einem geöffneten Zustand mechanisch vorgespannt sein. Das Auslassventil kann ebenfalls als ein elektromagnetisch gesteuertes Proportional-Wegeventil ausgeführt sein. Dies ist jedoch ebenfalls rein beispielhaft und nicht zwingend. Alternativ kann das Auslassventil beispielsweise auch als ein einfaches Wegeventil ausgeführt sein, welches in den geöffneten Zustand und in einen geschlossenen Zustand versetzt werden kann. Die elektronische Steuerungseinheit ist insbesondere dazu eingerichtet, das Einlassventil und das Auslassventil derart zu steuern, dass zur Aktivierung der Anhängerbremse das Einlassventil in einen geöffneten Zustand und das Auslassventil gleichzeitig in einen geschlossenen Zustand versetzt wird, wodurch das Einlassventil unter einem Steuerdruck stehendes Druckmittel an das Anhängefahrzeug-Relaisventil ausgibt, welches basierend auf dem Steuerdruck unter einem Bremssteuerdruck stehendes Druckmittel in die Anhängersteuerleitung zur Aktivierung der Anhängerbremse ausgibt. Alternativ können das Einlassventil und das Auslassventil beide in dem geschlossenen Zustand oder in dem geöffneten Zustand vorgespannt sein.

Gemäß einer Ausführungsform ist die elektronische Steuerungseinheit zur Deaktivierung der Anhängerbremse dazu eingerichtet, das Einlassventil in den geschlossenen Zustand und das Auslassventil in den geöffneten Zustand zu versetzen, wodurch das Einlassventil keinen Steuerdruck an das Anhängefahrzeug-Relaisventil ausgibt und Druckmittel aus der Anhängersteuerleitung über das Anhängefahrzeug-Relaisventil in die drucklose Umgebung (U) entweicht. Die elektronische Steuerungseinheit ist insbesondere dazu eingerichtet, das Aktivieren und Deaktivieren der Anhängerbremse zyklisch zu wiederholen, um die Druckmittelquelle zu entleeren. Der Vorteil dieser Lösung ist die große Luftmenge, die benötigt wird, um die Anhängersteuerleitung zu füllen und die nachher wieder abgesaugt wird. Durch das Befüllen der Anhängersteuerleitung wird im Falle eines pneumatischen Bremssystems ein bestimmtes, vom Anhänger abhängiges Druckluftvolumen des Druckluftspeichers verwendet. Durch das Befüllen, bei gleichzeitig gestoppter Luftzufuhr (Kompressor abgeschaltet) sinkt der Druck im Druckluftspeicher. Beim Öffnen kann die Luft aus der Anhängersteuerleitung über einen Anschluss des Anhängersteuerventilsystems an die drucklose Umgebung abgegeben werden.

Alternativ ist die elektronische Steuerungseinheit dazu eingerichtet, das Einlassventil und das Auslassventil derart zu steuern, dass das Einlassventil und das Auslassventil in den geöffneten Zustand versetzt werden, sodass kontinuierlich Druckmittel aus der Druckmittelquelle über das Einlassventil und über das Auslassventil in die drucklose Umgebung entweicht. Somit erfolgt ein Umschalten von Einlass- und Auslassventil in der Weise, dass beide Ventile in offener Stellung sind. Dies führt zu einer ständigen Luftleckage vom Einlass zum Auslass des Anhängersteuerventilsystems. Der Vorteil einer solchen Lösung ist ein konstanter, kontinuierlicher Druckabbau.

Die Entleerung der Druckmittelquelle über das Anhängersteuerventilsystem kann ohne eine parallele Aktivierung und Deaktivierung der Feststellbremse des Zugfahrzeugs ablaufen. In diesem Fall ist vorgesehen, dass nach dem vollständigen Entlüften des Vorratsbehälters der Feststellbremsanlage das Bremsventil für die Feststellbremse des Zugfahrzeugs einmal betätigt wird, um den Druck aus der Federkammer bzw. dem Bremszylinder der Feststellbremse des Zugfahrzeugs vollständig abzulassen. Diese Maßnahme ist dann erforderlich, wenn die Feststellbremsanlage über ein Rückschlagventil abgesichert ist, welches die Federkammer gegen Druckverluste im Vorratsbehälter aufgrund von Leckagen im Anhängersteuersystem absichert. In diesem Sinne ist gemäß einer weiteren Ausführungsform vorgesehen, dass das Bremssystem ein Rückschlagventil umfasst, welches zwischen der Druckmittelquelle einerseits und dem Bremszylinder andererseits angeordnet und eine Strömung von Druckmittel aus dem Bremszylinder in Richtung der Druckmittelquelle verhindert. Die elektronische Steuerungseinheit ist dabei dazu eingerichtet, das Bremsventil derart zu steuern, dass es sich in einen geschlossenen Zustand begibt, nachdem die Druckmittelquelle ausreichend entleert worden ist. Unter dem Merkmal "ausreichend entleert" kann in diesem Zusammenhang insbesondere verstanden werden, dass noch in der Druckmittelquelle bevorratetes Druckmittel nicht zur Deaktivierung der Feststellbremse(n) und der Anhängerbremse ausreicht. Dadurch entweicht Druckmittel aus dem Bremszylinder über das Bremsventil direkt in die drucklose Umgebung, bis der Bremszylinder derart entleert worden ist, dass die Feststellbremse aktiviert wird.

Zur alternativen oder ergänzenden Entleerung der Druckmittelquelle kann die elektronische Steuerungseinheit dazu eingerichtet sein, das Bremsventil derart zu steuern, dass es sich abwechselnd in einen geschlossenen Zustand und in den geöffneten Zustand begibt, wenn das Steuerventil oder das Redundanzventil aufgrund eines mechanischen Defekts in dem geöffneten Zustand verharrt, obwohl es sich in dem geschlossenen Zustand befinden sollte, und wenn die Zündung des Zugfahrzeugs und damit auch der Kompressor zur Befüllung der Druckmittelquelle ausgeschaltet sind. Wenn sich das Bremsventil in dem geschlossenen Zustand befindet, dann entweicht Druckmittel aus dem Bremszylinder über das Bremsventil direkt in die drucklose Umgebung. Weiterhin wird kein Druckmittel aus der Druckmittelquelle in den Bremszylinder geleitet. Wenn sich das Bremsventil dagegen in dem geöffneten Zustand befindet, dann wird Druckmittel aus der Druckmittelquelle in den Bremszylinder geleitet. Der Vorteil der vorstehend Beschriebenen Optionen zur Entleerung der Druckmittelquelle und die damit verbundene Aktivierung der Feststellbremse des Zugfahrzeugs im Falle eines mechanisch verklemmten Steuer- oder Redundanzventils ist die Verwendung vorhandener Geräte, die keine zusätzlichen Ventile oder Leitungen erfordern, die durch die Kabine verlegt werden.

Um die Geschwindigkeit der Druckentlastung größerer Volumina (z.B. Anhängersteuerleitung oder Federbremszylinder) insbesondere bei zyklischer Aktivierung/Deaktivierung zu erhöhen, kann der Einsatz eines Schnellentlüftungsventils von Vorteil sein. Das Schnellentlüftungsventil ist dazu eingerichtet, Druckmittel aus dem Bremszylinder und/oder der Anhängersteuerleitung direkt in die drucklose Umgebung abzulassen. Das Schnellentlüftungsventil ist bevorzugt vom Einleitertyp. Weiterhin ist das Schnellentlüftungsventil an wenigstens einer der folgenden Positionen angeordnet, nämlich zwischen einem Relaisventil und einem Bremszylinder der Parksperre des Zugfahrzeugs, innerhalb des genannten Relaisventils, innerhalb des Bremszylinders und stromabwärts des Anhängersteuerventilsystems, insbesondere in der Anhängersteuerleitung, die an das Anhängersteuerventilsystem angeschlossen ist. Da Schnellentlüftungsventile große Luftdurchlässe bieten und die Möglichkeit besteht, diese Ventile in der Nähe der mit Druck beaufschlagten Volumen (Bremszylinder, Anhängersteuerventil) zu platzieren, ist eine schnelle Entlüftung möglich, ohne durch kleine Durchflussdurchmesser anderer Ventile oder lange Leitungen dazwischen eingeschränkt zu sein.

Weiterhin kann im Normalbetrieb eine rein mechanische Steuerung des Bremssystems vorgesehen sein. Dadurch wird auch in Abwesenheit des Fahrers, und somit bei abgeschalteter Zündung (=stromloser Zustand), eine permanente Druckbeaufschlagung an den Anhänger ermöglicht. Dabei befinden sich das Steuerventil und das Redundanzventil in dem geöffneten Zustand und geben einen Steuerdruck aus, welcher an dem Anhängefahrzeug-Relaisventil anliegt. Insbesondere liegt der Steuerdruck an einem invertierten Eingang des Anhängefahrzeug-Relaisventils an, sodass über das Anhängefahrzeug-Relaisventil kein Druck in Richtung der Anhängersteuerleitung ausgegeben wird, wenn der Steuerdruck an dem invertierten Eingang des Anhängefahrzeug-Relaisventils anliegt. In diesem Sinne ist gemäß einer weiteren Ausführungsform vorgesehen, dass das Steuerventil und das Redundanzventil Druckmittel an das Anhängefahrzeug-Relaisventil ausgeben, wenn sich das Steuerventil und das Redundanzventil in dem geöffneten Zustand befinden, sodass das Anhängefahrzeug-Relaisventil kein Druckmittel in die Anhängersteuerleitung ausgibt und die Anhängerbremse nicht aktiviert wird.

Außerdem kann eine Warnung/Information des Fahrers vorgesehen sein. Der Fahrer fordert über eine Schnittstelle eine Aktivierung der Feststellbremse an. Da eines der Feststellbremsventile in geöffneter Stellung festsitzt, stehen die Federbremszylinder noch unter Druck und werden nicht aktiviert, sodass die Feststellbremse nicht angezogen wird. Wenigstens ein Drucksensor, der sich in der Nähe der Federbremszylinder befindet, erkennen, dass der Druck nicht abgelassen wird. Die elektronische Steuerungseinheit der Bremse sendet nun eine Warnung an das Kraftfahrzeug, die eine Warnung für den Fahrer und Anweisungen, wie das Fahrzeug in einen sicheren Zustand zu bringen ist, anzeigen könnte. Der Fahrer sollte das Kraftfahrzeug nun mit aktivierter Betriebs- oder Sekundärbremsanlage zum Stehen bringen. Gleichzeitig wird der Fahrer aufgefordert, den Motor abzuschalten, um eine kontinuierliche Luftzufuhr zum Versorgungskreis der Feststellbremsanlage zu vermeiden. Sobald die elektronische Steuerungseinheit des Bremssystems erkennt, dass der Motor über eine bestimmte Klemme abgestellt ist, kann mit dem automatisierten Entleeren der Druckmittelquelle begonnen werden.

In diesem Sinne wird gemäß einem zweiten Aspekt der Erfindung ein Verfahren zur Steuerung des Bremssystems gemäß dem ersten Aspekt der Erfindung bereitgestellt. Das Verfahren umfasst insbesondere die folgenden Schritte:
(100) Bereitstellen eines Bremssystems gemäß dem ersten Aspekt der Erfindung,
(200) Anfordern eine Aktivierung der Feststellbremse durch einen Fahrer des Zugfahrzeugs mittels einer Mensch-Maschine-Schnittstelle,
(300) Erkennen, dass das Steuerventil oder das Redundanzventil aufgrund eines mechanischen Defekts in dem geöffneten Zustand verharrt, obwohl es sich in dem geschlossenen Zustand befinden sollte, durch Auswertungen von Druckwerten eines Drucksensors, welcher in der Nähe des Bremszylinders angeordnet ist,
(400) Ausgabe eines Warnsignals, welches dem Fahrer signalisiert, dass die Feststellbremse nicht wie vorgesehen aktiviert werden kann,
(500) Anhalten des Zugfahrzeugs durch Betätigung einer Betriebs- oder Sekundärbremsanlage,
(600) Ausschalten einer Zündung des Zugfahrzeugs, sodass der Kompressor zur Befüllung der Druckmittelquelle ausgeschaltet wird, und
(700) Steuern des Anhängersteuerventilsystems derart, dass Druckmittel über das Anhängersteuerventilsystem in die drucklose Umgebung entweicht, und/oder Steuern des Bremsventils derart, dass es sich abwechselnd in einen geschlossenen Zustand und in den geöffneten Zustand begibt, wodurch die Druckmittelquelle entleert wird.

Wenn das Druckniveau in der Federspeicherbremskammer einen bestimmten Grenzwert erreicht, der die Bremsen betätigen würde, könnte eine zusätzliche Fahrerinformation erfolgen, dass der sichere Zustand erreicht ist. Der Fahrer könnte nun das aktivierte alternative Bremssystem lösen und das Kraftfahrzeug verlassen. In diesem Sinne ist gemäß einer weiteren Ausführungsform vorgesehen, dass das Verfahren weiterhin die folgenden Schritte umfasst, nämlich
(800) Ausgabe eines Sicherheitssignals, welches dem Fahrer signalisiert, dass die Feststellbremse nunmehr aktiviert ist, wenn die Druckmittelquelle derart entleert ist, dass noch in der Druckmittelquelle bevorratetes Druckmittel nicht zur Deaktivierung der Feststellbremse ausreicht, und
(900) Stoppen der Betätigung der Betriebs- oder Sekundärbremsanlage.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: eine Draufsicht auf einen Teil eines Bremssystems für ein Zugfahrzeug und ein Anhängefahrzeug,
- Fig. 2: eine vergrößerte Ansicht eines Anhängersteuerventilsystems des Bremssystems nach Fig. 1,
- Fig. 3: beispielhafte Zustandsgrößen des Bremssystems nach Fig. 1,
- Fig. 4: beispielhafte Details eines Schnellentlüftungsventils für das Bremssystem nach Fig. 1 und
- Fig. 5: einen Ablauf eines Verfahrens zur Steuerung des Bremssystems nach Fig. 1.

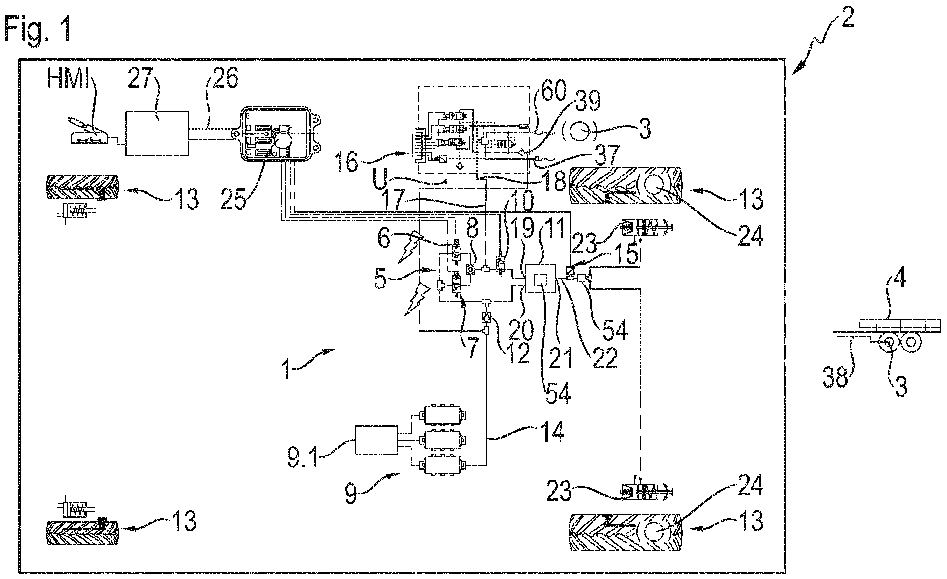

Fig. 1 zeigt einen Teil eines Bremssystems 1 für ein nicht näher dargestelltes Zugfahrzeug 2. Bei dem Zugfahrzeug 2 handelt es sich beispielsweise um ein landwirtschaftliche Nutzfahrzeug, insbesondere um einen Traktor. Das Bremssystem 1 erfüllt insbesondere eine Feststell- bzw. Dauerbremsfunktion ("Parkbremsfunktion") von Rädern 13 des Zugfahrzeugs 2 sowie einer in Fig. 1 lediglich angedeuteten Anhängerbremse 3 eines Anhängefahrzeugs 4. Die im Folgenden näher beschriebenen Funktionen können ein Teil einer Traktor-Bremssystem-Plattform sein, welche den sicheren Betrieb des Bremssystems 1 bei verschiedenen Ausfallszenarien gewährleistet.

Das Bremssystem 1 umfasst ein elektronisch steuerbares Festellbremsmodul 5. Das Feststellbremsmodul 5 umfasst ein als Steuerventil 6 ausgebildetes erstes 3/2-Wegeventil, ein als Redundanzventil 7 ausgebildetes zweites 3/2-Wegeventil, ein druckgesteuertes Wechselventil 8, ein als Bremsventil 10 ausgeführtes 3/2-Wegeventil, ein Relaisventil 11 (Zugfahrzeug-Relaisventil), ein Rückschlagventil 12 und einen Drucksensor 15. Das Steuerventil 6 und das Redundanzventil 7 des Feststellbremsmoduls 5 werden eingangsseitig über eine Versorgungsleitung 14 und über das Rückschlagventil 12 von einer Druckmittelquelle 9 mit Druckmittel versorgt, in dem gezeigten Ausführungsbeispiel mit pneumatischem Druckmittel in Form von Druckluft. Auch das Relaisventil 11 des Feststellbremsmoduls 5 wird eingangsseitig über die Versorgungsleitung 14 und über das Rückschlagventil 12 von der Druckmittelquelle 9 mit Druckluft versorgt. Die Druckmittelquelle 9 kann einen Kompressor 9.1 umfassen, welcher von einer nicht gezeigten Antriebsmaschine bzw. einem Motor (z.B. ein Verbrennungskraftmotor oder ein Elektromotor) des Zugfahrzeugs 2 angetrieben werden kann, wenn eine Zündung des Zugfahrzeugs 2 eingeschaltet ist.

Das Steuerventil 6 und das Redundanzventil 7 sind in einer pneumatischen Parallelschaltung jeweils eingangsseitig über die Versorgungsleitung 14 und das Rückschlagventil 12 mit der Druckmittelquelle 9 verbunden. Unter dem Merkmal "verbunden" ist insbesondere zu verstehen, dass die jeweils miteinander verbundenen Elemente pneumatisch leitend miteinander verbunden sind, d.h. dass Druckluft von dem einen Element zu dem anderen Element strömen kann und ggfs. umgekehrt. Das Wechselventil 8 ist eingangsseitig mit jeweils einem Ausgang des Steuerventils 6 und des Redundanzventils 7 verbunden. Ausgangsseitig ist das Wechselventil 8 mit einem Eingang des Bremsventils 10 sowie über eine Verbindungsleitung 17 mit einem ersten Eingang 18 eines weiter unten näher beschriebenen Anhängersteuerventilsystems 16 verbunden. Somit kann der jeweils höhere Druck der beiden Ventile 6, 7 über den Ausgang des Wechselventils 8 in Richtung des Bremsventils 10 und des ersten Eingangs 18 des Anhängersteuerventilsystems 16 ausgegeben werden.

Ein Steuerdruckeingang 19 des Relaisventils 11 ist mit einem Ausgang des Bremsventils 10 verbunden. Ein Versorgungsdruckeingang 20 des Relaisventils 11 ist über das Rückschlagventil 12 und die Versorgungsleitung 14 mit der Druckmittelquelle 9 verbunden. Ein Druckausgang 21 des Relaisventils 11 ist über eine Bremszylinderleitung 22 mit zwei Bremszylindern 23 zur Betätigung jeweils einer Feststellbremse 24 verbunden. Der Drucksensor 15 ist in der Bremszylinderleitung 22 angeordnet und misst den darin vorherrschenden Druck, welcher ebenfalls repräsentativ für einen Druck innerhalb der Bremszylinder 23 angesehen werden kann. Der Drucksensor 15 übermittelt den gemessenen Druck an eine elektronische Steuerungseinheit 25 des Bremssystems 1.

Bei dem Steuerventil 6 und bei dem Redundanzventil 7 handelt es sich in dem gezeigten Ausführungsbeispiel um Gleichteile, was jedoch nicht zwingend ist. Ein Ventilschieber des Steuerventils 6 und des Redundanzventils 7 ist jeweils in einem nicht dargestellten Ventilgehäuse durch ein Federelement in einer geschlossenen Schaltstellung vorgespannt ("normally closed"), was einem durch Fig. 1 gezeigten geschlossenen Zustand des Steuerventils 6 und des Redundanzventils 7 entspricht. Wenn sich das Steuerventil 6 und das Redundanzventil 7 in dem geschlossenen Zustand befinden, dann wird keine Druckluft aus der Druckmittelquelle 9 über das Steuerventil 6 und das Redundanzventil 7 in Richtung des Wechselventils 8, des weiter stromabwärts angeordneten Bremsventils 10 und des weiter stromabwärts angeordneten Relaisventils 11 geleitet. Somit liegt kein Steuerdruck an dem Steuerdruckeingang 19 des Relaisventils 11 an, wodurch das Relaisventil 11 keine Druckluft, die an dem Versorgungsdruckeingang 20 anliegt, über den Druckausgang 21 in die Bremszylinderleitung 22 fördert. Folglich werden die Bremszylinder 23 nicht mit Druckluft gefüllt, wodurch in den Bremszylindern 23 kein Deaktivierungsdruck aufgebaut wird, sodass die Parksperren 24 aktiviert werden bzw. bleiben.

Das Steuerventil 6 und das Redundanzventil 7 weisen Elektromagnete auf, die bestromt werden können, sodass die Ventilschieber aus der geschlossenen Schaltstellung in eine geöffnete Schaltstellung verschoben werden, was einem geöffneten Zustand des Steuerventils 6 und des Redundanzventils 7 entspricht. Das Bestromen der Elektromagneten erfolgt durch die elektronische Steuerungseinheit 25. Wenn sich das Steuerventil 6 und das Redundanzventil 7 in dem geöffneten Zustand befinden, dann wird Druckluft aus der Druckmittelquelle 9 über das Steuerventil 6 und das Redundanzventil 7 geleitet und kann über das Wechselventil 8 sowie das weiter stromabwärts angeordnete Bremsventil 10 dem Steuerdruckeingang 19 des Relaisventils 11 zugeführt werden. Wenn das Steuerventil 6 ausfällt, dann kann der Druck des Redundanzventils 7 weiter genutzt werden, sofern das Redundanzventil 7 nicht ausgefallen ist. Wenn das Redundanzventil 7 ausfällt, dann kann der Druck des Steuerventils 6 weiter genutzt werden, sofern das Steuerventil 6 nicht ausgefallen ist.

Ein Ventilschieber des Bremsventils 10 ist innerhalb dessen Ventilgehäuse durch ein Federelement in einer durch Fig. 1 gezeigten geöffneten Schaltstellung vorgespannt ("normally open"), was einem geöffneten Zustand des Bremsventils 10 entspricht. Wenn sich das Bremsventil 10 in dem geöffneten Zustand befinden, dann wird Druckluft, die aus der Druckmittelquelle 9 über das geöffnete Steuerventil 6 oder das geöffnete Redundanzventil 7 sowie das Wechselventil 8 geleitet worden ist, über das Bremsventil 10 dem Steuerdruckeingang 19 des Relaisventils 11 zugeführt. In diesem Fall fördert das Relaisventil 11 Druckluft, die an dem Versorgungsdruckeingang 20 anliegt, über den Druckausgang 21 in die Bremszylinderleitung 22. Folglich werden die Bremszylinder 23 mit Druckluft gefüllt, wodurch in den Bremszylindern 23 ein Deaktivierungsdruck aufgebaut wird, sodass die Parksperren 24 deaktiviert werden. Die Räder 13 des Zugfahrzeugs 2 sind dann nicht festgestellt.

Die elektronische Steuerungseinheit 25 kann eine Bestromung eines Elektromagneten des Bremsventils 10 derart steuern, dass der Ventilschieber des Bremsventils 10 aus der geöffneten Schaltstellung in eine geschlossene Schaltstellung verschoben wird, was einem geschlossenen Zustand des Bremsventils 10 entspricht. Wenn sich das Bremsventil 10 in dem geschlossenen Zustand befindet, dann kann Druckluft aus den Bremszylindern 23 über das Relaisventil 11 und das Bremsventil 10 in eine drucklose Umgebung U entweichen, sodass der Deaktivierungsdruck abgebaut wird und die Parksperre 24 aktiviert wird. Die Räder 13 des Zugfahrzeugs 2 sind dann festgestellt. Man kann in diesem Zusammenhang davon sprechen, dass die Ventilanordnung 5 eine invertierende Schaltcharakteristik aufweist. Die Parksperren 24 des Zugfahrzeugs 2 werden betätigt, wenn über das Relaisventil 11 kein Druck ausgegeben wird, sowie gelöst, wenn über das Relaisventil 11 ein ausreichend hoher Druck ausgegeben wird, der zu dem Deaktivierungsdruck innerhalb der Bremszylinder 23 führt.

Fig. 1 zeigt, dass die elektronische Steuerungseinheit 25 des Bremssystems 1 über einen CAN BUS 26 mit einer elektronischen (Haupt-)Steuerungseinheit 27 des Zugfahrzeugs 2 verbunden sein kann. Die elektronische (Haupt-)Steuerungseinheit 27 des Zugfahrzeugs 2 ist in dem gezeigten Ausführungsbeispiel insbesondere mit einer Mensch-Maschine-Schnittstelle HMI in einer Fahrerkabine des Zugfahrzeugs 2 verbunden. Mittels der Mensch-Maschine-Schnittstelle HMI kann ein Fahrer oder Nutzer des Zugfahrzeugs 2 die Bremszylinder 23 des Zugfahrzeugs 2 und/oder die Anhängerbremse 3 des Anhängefahrzeugs 4 bedienen. Wenn die Parksperren 24 im Normalbetrieb betätigt bzw. aktiviert werden sollen, d.h. wenn sich die elektronische Steuerungseinheit 25 in einem aktiven Zustand befindet, dann werden das Steuerventil 6 und das Redundanzventil 7 deaktiviert, d.h. in den geschlossenen Zustand versetzt, sodass die Bremszylinder 23 über das Relaisventil 11 sowie das deaktivierte Bremsventil 10 entlüftet werden kann. Wenn das Bremsventil 10 deaktiviert ist, befindet es sich in dem geöffneten Zustand, sodass Druckmittel aus dem Bremszylinder 23 über das Relaisventil 11, das Bremsventil 10, das Wechselventil 8, das Steuerventil 6 und das Redundanzventil 7 in die drucklose Umgebung U entweichen kann.

Es kann der Fall eintreten, dass das Steuerventil 6 und/oder das Redundanzventil 7 einen mechanischen Defekt aufweisen, was zu einer verklemmten Öffnungsstellung des betreffenden Ventils 6 und/oder 7 führt. In diesem Fall kann der Druck innerhalb der Bremszylinder 23 bei der Anforderung einer Betätigung der Parksperren 24 nicht über das verklemmte Ventil 6 und/oder 7 abgelassen werden. Solange die Zündung des Zugfahrzeugs 2 eingeschaltet ist oder die elektronische Steuerungseinheit 25 zur Steuerung der einzelnen Geräte unter Spannung steht, kann dieser Druck innerhalb der Bremszylinder 23 durch Öffnen des Bremsventils 10 unter Überwindung der ständigen Versorgung durch das defekte Ventil 6 und/oder 7 abgebaut werden. Die elektronische Steuerungseinheit 25 wird dazu den Elektromagneten des Bremsventils 10 derart bestromen, dass dessen Ventilschieber in die geschlossene Stellung verschoben wird. Wenn sich der Ventilschieber des Bremsventils 10 in der geschlossenen Stellung befindet, dann ist der Bremszylinder 23 über das Relaisventil 11 und das Bremsventil 10 mit der drucklosen Umgebung U verbunden, wohingegen das Steuerventil 6 und das Redundanzventil 7 von dem Relaisventil 11 und den Bremszylindern 23 getrennt sind. Dadurch entweicht Druckluft aus dem Bremszylinder 23 über das Bremsventil 10 direkt in die drucklose Umgebung U. Weiterhin wird keine Druckluft aus der Druckmittelquelle 9 über das Relaisventil 11 in die Bremszylinder 23 geleitet.

Soll nun auch die elektronische Steuerungseinheit 25 abgeschaltet werden, dann würde der Elektromagnet des Bremsventils 10 normalerweise nicht länger bestromt. Dadurch ginge das Bremsventil 10 in den vorgespannten Zustand über, d.h. der Ventilschieber des Bremsventils 10 würde durch dessen Federelement in die durch Fig. 1 gezeigte geöffnete Schaltstellung verschoben. Somit würden die Bremszylinder 23 wieder mit Druck beaufschlagt und die Parksperren 24 gelöst. Um eine solch riskante Situation zu vermeiden, versetzt die elektronische Steuerungseinheit 25 (bevor sie sich selbst abschaltet oder abgeschaltet werden darf) das Bremsventil 10 abwechselnd in den geöffneten und in den geschlossenen Zustand. Dies geschieht, wenn die Zündung des Zugfahrzeugs 2 ausgeschaltet ist, sodass der Motor zum Antrieb des Zugfahrzeugs 1 und des Kompressors 9.1 nicht länger läuft, wodurch die Druckmittelquelle 9 nicht länger befüllt wird. Dadurch werden die Bremszylinder 23 abwechselnd gefüllt, bedruckt und wieder entlüftet, sodass die Druckmittelquelle 9, welche die Bremszylinder 23 speist, derart entleert wird, dass innerhalb der Bremszylinders 23 während ihrer Befüllung nicht länger der Deaktivierungsdruck erreicht wird.

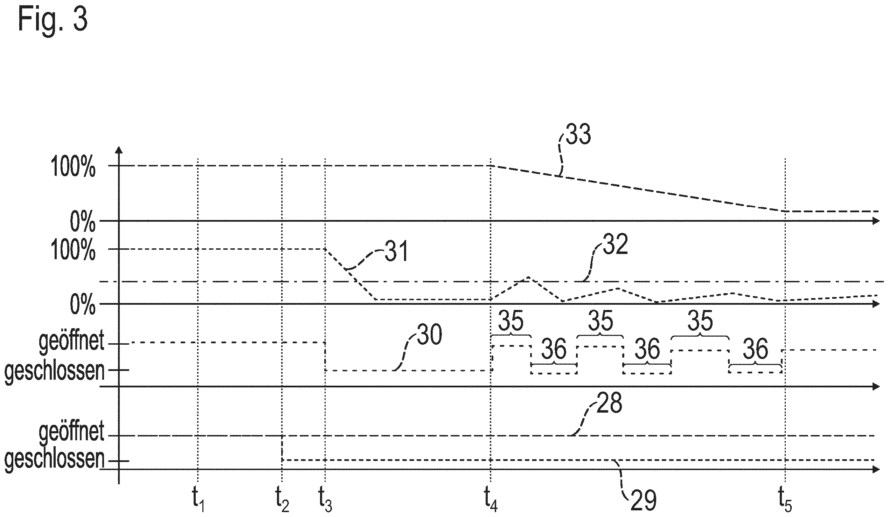

Fig. 3 veranschaulicht das vorstehend beschriebene Szenario in zeitlichen Verläufen von Zustandswerten. So zeigt ein in Fig. 3 unten dargestellter erster Graph 28 den zeitlichen Verlauf des Zustands des Steuerventils 6. Ein weiterer in Fig. 3 unten dargestellter zweiter Graph 29 zeigt den zeitlichen Verlauf des Zustands des Redundanzventils 7. Oberhalb des ersten und zweiten Graphs 28, 29 zeigt ein dritter Graph 30 den zeitlichen Verlauf des Zustands des Bremsventils 10. Oberhalb des dritten Graphs 30 zeigt ein vierter Graph 31 den zeitlichen Verlauf des relativen Drucks (0% entspricht einem drucklosen Zustand, 100% einem maximal zulässigen Druck), der innerhalb der Bremszylinder 23 vorherrscht. Weiterhin ist ein Grenzwert 32 für den Druck eingezeichnet. Wenn der Druck, der innerhalb der Bremszylinder 23 vorherrscht, unterhalb des Grenzwerts 32 liegt, dann sind die Parksperren 24 aktiviert. Bei dem Grenzwert 32 kann es sich beispielsweise um den vorstehend beschriebenen Deaktivierungsdruck handeln. Alternativ kann auch ein geringerer Wert gewählt werden, um eine erhöhte Sicherheit gegen ein nicht vorgesehenes Deaktivieren der Parksperren 24 zu verhindern. Oberhalb des vierten Graphs 31 zeigt ein fünfter Graph 32 den zeitlichen Verlauf eines Ausgabedrucks der Druckmittelquelle 9.

Zu einem ersten Zeitpunkt t₁ wird das Zugfahrzeug 2 gestoppt, z.B. mittels einer Betriebsbremse. Das Steuerventil 6, das Redundanzventil 7 und das Bremsventil 10 verbleiben in ihrem geöffneten Zustand, sodass innerhalb der Bremszylinder 23 weiterhin ein Druck vorherrscht, der oberhalb des Grenzwerts 32 liegt, wodurch die Parksperren 24 deaktiviert bleiben. Zu einem nachfolgenden zweiten Zeitpunkt t₂ wird die Aktivierung der Parksperren 24 eingeleitet, z.B. indem der Fahrer die Mensch-Maschine-Schnittstelle HMI entsprechend bedient. Ab dem zweiten Zeitpunkt t₂ wird das Redundanzventil 7 durch sein Federelement aus der geöffneten Schaltstellung in die geschlossene Schaltstellung verschoben. Bei dem Steuerventil 6 funktioniert dies jedoch nicht, weil ein mechanischer Defekt dafür sorgt, dass das Federelement des Steuerventils 6 dessen Ventilschieber nicht in die geschlossene Stellung verschieben kann. Das Steuerventil 6 verharrt somit in dem geöffneten Zustand. Das Bremsventil 10 verbleibt wie vorgesehen in seinem geöffneten Zustand. Der Druck 31 innerhalb der Bremszylinders 14 sinkt nicht, da das Steuerventil 6 weiterhin geöffnet ist, sodass Druckluft aus der Druckmittelquelle 9 weiterhin ungewollt über das Relaisventil 11 in die Bremszylinder 14 nachströmt.

Zu einem nachfolgenden dritten Zeitpunkt t₃ erkennt die elektronische Steuerungseinheit 25, dass das Steuerventil 6 sich in dem geöffneten Zustand befindet, obwohl es sich zur Aktivierung der Parksperren 24 in dem geschlossenen Zustand befinden sollte. Um dennoch eine Aktivierung der Parksperren 24 zu ermöglichen, bestromt die elektronische Steuerungseinheit 25 den Elektromagneten des Bremsventils 10 derart, dass dessen Ventilschieber sich in die geschlossene Schaltstellung bewegt. Dadurch entweicht Druckmittel aus den Bremszylindern 23 über das Relaisventil 11 und das Bremsventil 10 in die drucklose Umgebung U. Dadurch fällt der Druck 31 innerhalb der Druckzylinder 14 unter den Grenzwert 32 und die Parksperren 24 werden aktiviert.

Zu einem nachfolgenden vierten Zeitpunkt t₄ wird die Zündung des Zugfahrzeugs 2 ausgeschaltet, sodass die Druckmittelquelle 9 nicht länger befüllt wird und entleert werden kann. Der Status der Zündung kann von der elektronische Steuerungseinheit 25 erfasst werden, indem ein Strom erfasst wird, der durch eine entsprechende Klemme ("TRM15") an der elektronischen Steuerungseinheit 27 des Zugfahrzeugs 2 fließt oder nicht. Die elektronische Steuerungseinheit 25 des Bremssystems 1 bestromt den Elektromagneten des Bremsventils 10 jetzt derart, dass sich dessen Ventilschieber abwechselnd in die geöffnete und geschlossene Schaltstellung bewegt. Dies führt dazu, dass während eines Öffnungszyklus' 35 (in dem das Bremsventil 10 geöffnet ist) Druckluft aus der sich entleerenden Druckmittelquelle 9 über das Relaisventil 11 in die Bremszylinder 23 gelangt, sodass sich Druck in dem Bremszylinder 23 aufbaut. Dieser Druck wird in einem auf den Öffnungszyklus 35 folgenden Schließzyklus 36 (in dem das Bremsventil 10 geschlossen ist) wieder abgebaut. Aus Fig. 3 ist ersichtlich, dass während eines ersten Öffnungszyklus' 35 des Bremsventils 10 der Grenzwert 32 noch überschritten wird, bei den darauffolgenden Öffnungszyklen 35 jedoch bereits nicht mehr.

Sobald die elektronische Steuerungseinheit 25 erkennt, dass der Grenzwert 32 während eines Öffnungszyklus' des Bremsventils 10 nicht mehr erreicht wird, kann sie sich zu einem fünften Zeitpunkt t₅ abschalten. In dem durch Fig. 3 gezeigten Ausführungsbeispiel wartet die elektronische Steuerungseinheit 25 noch einen weiteren Öffnungszyklus ab, bevor sie ihre Abschaltung einleitet. Wenn die elektronische Steuerungseinheit 25 abgeschaltet ist, dann befindet sie sich in einem inaktiven Zustand, sodass das Bremsventil 10 in seinen mechanisch vorgespannten geöffneten Zustand versetzt wird. Das Redundanzventil 7 verbleibt in seinem mechanisch vorgespanntem geschlossenen Zustand. Das Steuerventil 6 verbleibt weiterhin in seinem verklemmten geöffneten Zustand. Allerdings wird nicht mehr ausreichend Druckmittel aus der zumindest teilweise entleerten Druckmittelquelle 9 über das Relaisventil 11 in den Bremszylinder 14 geleitet, um den Deaktivierungsdruck in den Bremszylindern 14 aufzubauen und die Parksperren 24 zu deaktivieren. Um den Druck innerhalb der Bremszylinder 14 zu erfassen, weist das Bremssystem 1 den Drucksensor 15 auf. Der Drucksensor 15 misst einen Leitungsdruck innerhalb der Bremszylinderleitung 22, welche das Relaisventil 11 mit den Bremszylindern 14 verbindet. Die Prozessoreinheit 25 greift auf den von dem Drucksensor 15 gemessenen Leitungsdruck zu und kann sich wie vorstehend beschrieben abschalten, wenn der Leitungsdruck während der Befüllung der Bremszylinder 23 (also während einer der vorstehend beschriebenen Öffnungszyklen 35) den vorgegebenen Grenzwert nicht länger erreicht.

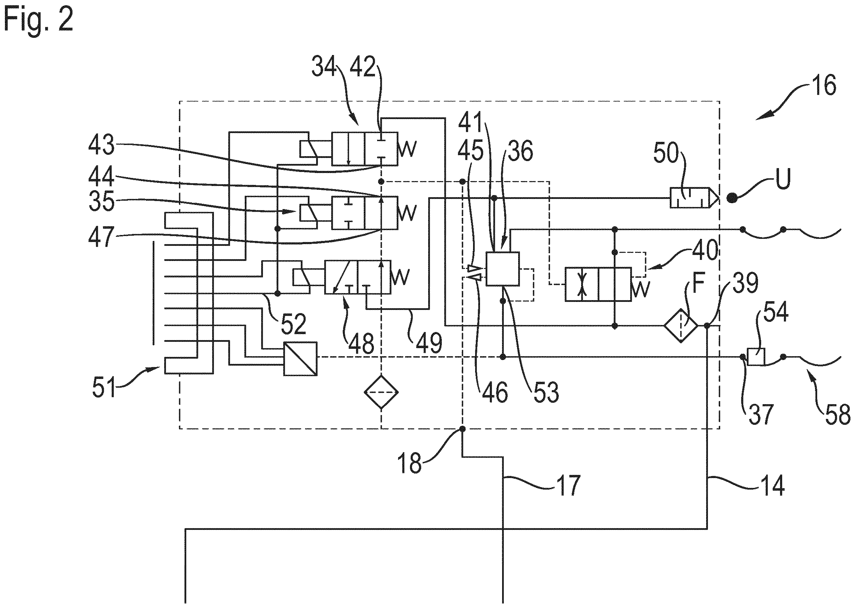

Auch das Anhängersteuerventilsystem 16 kann genutzt werden, um die Druckmittelquelle 9 zu entleeren, und zwar sowohl alternativ als auch zusätzlich zu dem vorstehend beschriebenen Aktivieren und Deaktivieren der Parksperre 24 des Zugfahrzeugs 2. Wie besonders gut aus Fig. 2 ersichtlich ist, weist das Anhängersteuerventilsystem 16 insbesondere ein Einlassventil 34, ein Auslassventil 35 und ein Anhängefahrzeug-Relaisventil 36 auf. Weiterhin ist eine Anhängersteuerleitung 38 des Anhängefahrzeugs 4 einerseits mit einem Anhängerbremsanschluss bzw. Bremsdruckausgang 37 des Anhängersteuerventilsystems 5 und andererseits mit der Anhängerbremse 3 des Anhängefahrzeugs 4 verbunden. Ferner ist die Versorgungsleitung 14 an einen zweiten Eingang 39 des Anhängersteuerventilsystems 16 angeschlossen.

Druckluft aus der Druckmittelquelle 9 strömt zum einen unter Umgehung des Rückschlagventils 12 über die Versorgungsleitung 14 durch den zweiten Eingang 39 in das Anhängersteuerventilsystem 16, wo es über einen Filter F und ein Abrissventil 40 einem Druckeingang 41 des Anhängefahrzeug-Relaisventils 36 zugeführt wird. Zum anderen strömt Druckluft aus der Druckmittelquelle 9 ebenfalls unter Umgehung des Rückschlagventils 12 über die Versorgungsleitung 14 durch den zweiten Eingang 39 in das Anhängersteuerventilsystem 16, wo es über den Filter F und unter Umgehung des Abrissventils 40 einem Eingang 42 des Einlassventils 34 zugeführt wird. Ein Ausgang 43 des Einlassventils 34 ist zum einen mit einem Eingang 44 des Auslassventils 35 verbunden. Zum anderen ist der Ausgang 43 des Einlassventils 34 mit einem ersten Steuereingang 45 des Anhängefahrzeug-Relaisventils 36 verbunden. Ein zweiter invertierter Steuereingang 46 des Anhängefahrzeug-Relaisventils 36 ist mit dem ersten Eingang 18 des Anhängersteuerventilsystems 18 verbunden. Von dem Steuerventil 6 oder dem Redundanzventil 7 ausgegebene Druckluft kann über das Wechselventil 8 und die Verbindungsleitung 17 durch den ersten Eingang 18 in das Anhängefahrzeug-Relaisventils 36 strömen, wo es dem zweiten invertierten Steuereingang 46 zugeführt wird. Ein Ausgang 47 des Auslassventils 35 kann weiterhin über ein Redundanzventil 48 des Anhängersteuerventilsystems 16, eine Ablassleitung 49 und einen Schalldämpfer 50 mit der drucklosen Umgebung U verbunden werden.

Bei dem Einlassventil 34 und dem Auslassventil 35 handelt es sich in dem gezeigten Ausführungsbeispiel um elektromagnetisch gesteuerte Proportional-Wegeventile mit jeweils einem durch die elektronische Steuerungseinheit 25 steuerbarem Elektromagneten und einem Federelement zur mechanischen Vorspannung eines Ventilschiebers des Einlassventils 34 und des Auslassventils 35. Das Einlassventil 34 ist in einem durch Fig. 1 und 2 gezeigten geschlossenen Zustand mechanisch vorgespannt. Das Auslassventil 35 ist in einem durch Fig. 1 und 2 gezeigten geöffneten Zustand mechanisch vorgespannt. Wenn sich das Einlassventil 34 in dem geschlossenen Zustand und das Auslassventil 35 in dem geöffneten Zustand befindet, dann strömt über das Einlassventil 34 keine Druckluft zu dem ersten Steuereingang 45 des Anhängefahrzeug-Relaisventils 36. Wenn zusätzlich dem zweiten invertierten Steuereingang 46 des Anhängefahrzeug-Relaisventils 36 Druckluft zugeführt wird, die von dem Steuerventil 6 oder dem Redundanzventil 7 ausgegeben wird, dann gibt das Anhängefahrzeug-Relaisventil 36 über ihren Druckausgang 53 in Richtung des Bremsdruckausgangs 37 keine an dem Druckeingang 41 anliegende Druckluft aus. Entsprechend strömt auch keine Druckluft in die Anhängersteuerleitung 38 und die Anhängerbremse 3 wird nicht aktiviert, sodass die Räder des Anhängefahrzeugs 4 nicht festgestellt werden.

Die elektronische Steuerungseinheit 25 ist mit einer Steckerleiste 51 des Anhängersteuerventilsystems 16 verbunden. Die Steckerleiste 51 ist über elektronische Steuerleitungen 52 (der besseren Übersicht halber ist lediglich eine davon in Fig. 2 mit einem Bezugszeichen versehen) insbesondere mit den Elektromagneten des Einlassventils 34 und des Auslassventils 35 verbunden. Dadurch kann die elektronische Steuerungseinheit 25 über die Steckerleiste 51 und die elektronischen Steuerleitungen 52 den Zustand des Einlassventils 34 und des Auslassventils 35 steuern. Insbesondere kann die elektronische Steuerungseinheit 25 das Einlassventil 34 durch Bestromen von dessen Elektromagnet entgegen der mechanischen Vorspannung aus dem geschlossenen Zustand in einen geöffneten Zustand versetzen. Auf ähnliche Weise kann die elektronische Steuerungseinheit 25 das Auslassventil 35 durch Bestromen von dessen Elektromagnet entgegen der mechanischen Vorspannung aus dem geöffneten Zustand in einen geschlossenen Zustand versetzen.

Wenn sich das Einlassventil 34 in dem geöffneten Zustand und das Auslassventil 35 in dem geschlossenen Zustand befindet, dann strömt über das Einlassventil 34 Druckluft zu dem ersten Steuereingang 45 des Anhängefahrzeug-Relaisventils 36. Dabei gibt das Einlassventil 34 unter einem Steuerdruck stehende Druckluft an das Anhängefahrzeug-Relaisventil 36 aus, welches basierend auf dem Steuerdruck unter einem Bremssteuerdruck stehende Druckluft an den Anhängerbremsanschluss 37 ausgibt. Entsprechend strömt Druckluft in die Anhängersteuerleitung 38 und die die Anhängerbremse 3 wird aktiviert, sodass die Räder des Anhängefahrzeugs 4 festgestellt werden. Anschließend kann die elektronische Steuerungseinheit 25 zur Deaktivierung der Anhängerbremse 3 das Einlassventil 34 durch Stoppen des Bestromens von dessen Elektromagnet wieder in den mechanisch vorgespannten geschlossenen Zustand versetzen. Auf ähnliche Weise kann die elektronische Steuerungseinheit 25 das Auslassventil 35 durch Stoppen des Bestromens von dessen Elektromagnet wieder in den mechanisch vorgespannten geöffneten Zustand versetzen. Dadurch wird zum einen die Druckbeaufschlagung des Bremsdruckausgang 37 und der Anhängersteuerleitung 38, welche die Anhängerbremse 3 mit Druckluft versorgt, unterbrochen. Zum anderen wird in der Anhängersteuerleitung 38 befindliche Druckluft über den Anhängerbremsanschluss 37, das Anhängefahrzeug-Relaisventil 36 und den Schalldämpfer 50 in die drucklose Umgebung U abgelassen.

Durch die vorstehend beschriebene, abwechselnde Aktivierung und Deaktivierung der Anhängerbremse 3 (Alternative a)) wird insbesondere bei einem in dem geöffneten Zustand mechanisch verklemmten Steuerventil 6 und/oder Redundanzventil 7 jeweils ein Volumen Druckluft aus der Druckmittelquelle 9 verbraucht, was zum Entleeren der Druckmittelquelle 9 beiträgt. Gleichzeitig wird der Kompressor 9.1 der Druckmittelquelle 9 bei ausgeschalteter Zündung und Antriebsmaschine nicht länger befüllt. Das Aktivieren und Deaktivieren der Anhängerbremse 3 kann mehrmals wiederholt werden, um zum Entleeren der Druckmittelquelle 9 beizutragen, und zwar sowohl alternativ als auch zusätzlich zu dem sich ebenfalls widerholenden Aktivieren und Deaktivieren des Feststellbremse 24 des Zugfahrzeugs 2. Alternativ zu der abwechselnden Aktivierung und Deaktivierung der Anhängerbremse 3 (Alternative a)) kann die elektronische Steuerungseinheit 25 das Einlassventil 34 und das Auslassventil 35 derart steuern, dass sowohl das Einlassventil 34 als auch das Auslassventil 35 in den geöffneten Zustand versetzt werden (Alternative b)). Dadurch entweicht kontinuierlich Druckluft aus der Druckmittelquelle 9 über das Einlassventil 34, das Auslassventil 35, das Redundanzventil 48, die Ablassleitung 49 und den Schalldämpfer 50 in die drucklose Umgebung U.

Das Rückschlagventil 12 ist gemäß Fig. 1 zwischen der Druckmittelquelle 9 einerseits und dem Bremszylinder 23 andererseits angeordnet. Das Rückschlagventil 12 verhindert, dass Druckluft aus dem Bremszylinder 23 in Richtung der Druckmittelquelle 9 strömt. Das Rückschlagventil 12 sichert die Federkammern der Bremszylinder 23 gegen Druckverluste im Vorratsbehälter 9 aufgrund von Leckagen im Anhängersteuersystem 16 ab. Falls lediglich die Anhängerbremse 3 abwechselnd aktiviert und deaktiviert wird, um die Druckmittelquelle 9 zu entleeren, nicht jedoch die Feststellbremse 24 des Zugfahrzeugs 2, wenn das Steuerventil 6 oder das Redundanzventil 7 klemmt, dann ist vorgesehen, dass nach dem vollständigen Entlüften der Druckmittelquelle 9 über das Anhängersteuerventilsystem 16 das Bremsventil 10 einmal betätigt wird, um den Druck aus den Federkammern der Bremszylinder 23 vollständig abzulassen. Dazu steuert die elektronische Steuerungseinheit 25 das Bremsventil 10 derart, dass es sich in den geschlossenen Zustand begibt, nachdem die Druckmittelquelle 9 ausreichend entleert worden ist, wodurch Druckmittel aus dem Bremszylinder 23 über das Bremsventil 10 direkt in die drucklose Umgebung U entweicht. Dies erfolgt so lange, bis die Bremszylinder 23 derart entleert worden sind, dass die Feststellbremsen 24 aktiviert werden. Unter dem Merkmal, "nachdem die Druckmittelquelle 9 ausreichend entleert worden ist" kann in diesem Zusammenhang insbesondere verstanden werden, dass noch in der Druckmittelquelle 9 bevorratete Druckluft nicht zur Deaktivierung der Feststellbremsen 24 und der Anhängerbremse 3 ausreicht.

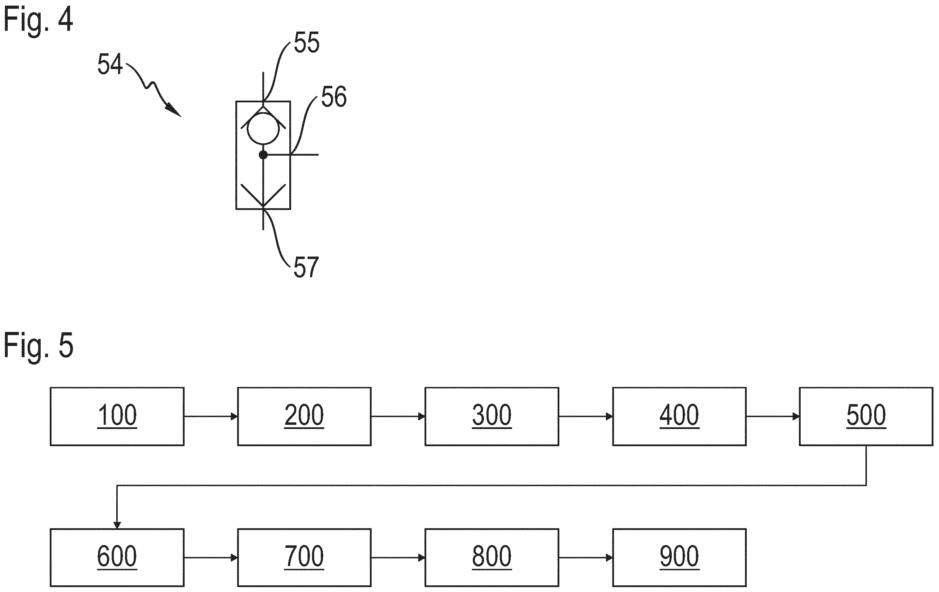

Um die Geschwindigkeit der Druckentlastung größerer Volumina (z.B. in der Anhängersteuerleitung 38 oder in den Federbremszylindern 23) bei zyklischer Aktivierung/Deaktivierung weiter zu erhöhen, ist gemäß dem Ausführungsbeispiel nach Fig. 1 wenigstens ein Schnellentlüftungsventil 54 vorgesehen. Das Schnellentlüftungsventil 54 kann in das Zugfahrzeug-Relaisventil 11 integriert sein. Alternativ kann das Schnellentlüftungsventil 54 stromabwärts des Anhängersteuerventilsystems 16 oder in der Bremszylinderleitung 22 zwischen dem Zugfahrzeug-Relaisventil 11 und den Bremszylindern 23 angeordnet sein. Weiterhin kann in wenigstens einem der Bremszylinder 23 eines der Schnellentlüftungsventile 54 angeordnet sein (nicht dargestellt). Das wenigstens eine Schnellentlüftungsventil 54 ist in dem durch Fig. 4 gezeigten Ausführungsbeispiel von dem Einleitertyp und ähnelt einem Rückschlagventil mit einem ersten Anschluss 55, einem zweiten Anschluss 56 und einem dritten Anschluss 57. Die Entlüftung des Schnellentlüftungsventils 54 ist geschlossen, solange der erste Anschluss 55 unter Druck steht. Sobald jedoch der erste Anschluss 55 drucklos ist, öffnet der Druck an dem zweiten Anschluss 56 den Durchgang zwischen dem zweiten Anschluss 55 und dem dritten Anschluss 57 (Auslass), sodass der Ausgang des Schnellentlüftungsventils 54 entlüftet wird.

Bezugnehmend auf die Anordnung des Schnellentlüftungsventils 54 stromabwärts des Anhängersteuerventilsystems 16 ist der erste Anschluss 55 mit dem Bremsdruckausgang 37 verbunden. Der zweite Anschluss 56 ist mit einem Kupplungskopf 58 ("Yellow Coupling Head" YCH) verbunden, welcher den Bremsdruckausgang 37 mit der Anhängersteuerleitung 38 verbindet. Somit ist die Anhängersteuerleitung 38 mit dem Schnellentlüftungsventil 54 verbunden. Der dritte Anschluss 37 ist mit der drucklosen Umgebung U verbunden. Folglich kann die Anhängersteuerleitung 38 über den dritten Anschluss 57 des Schnellentlüftungsventils 54 entlüftet werden, vorzugsweise über einen Geräusch- bzw. Schalldämpfer. In einer nicht gezeigten hydraulischen Alternative könnte die Entlüftung in einen drucklosen Tank erfolgen.

Bezugnehmend auf die Anordnung des Schnellentlüftungsventils 54 in oder stromabwärts des Zugfahrzeug-Relaisventils 11 ist der erste Anschluss 55 mit dem Versorgungsdruckeingang 20 des Zugfahrzeug-Relaisventils 11 verbunden. Der zweite Anschluss 56 ist mit einem T-Stück 59 zwischen den beiden Bremszylindern 23 verbunden. Somit sind die beiden Bremszylinder 23 mit dem Schnellentlüftungsventil 54 verbunden. Der dritte Anschluss 37 ist mit der drucklosen Umgebung U verbunden. Folglich können die Bremszylinder über den dritten Anschluss 57 des Schnellentlüftungsventils 54 entlüftet werden, vorzugsweise über einen Geräusch- bzw. Schalldämpfer. In einer nicht gezeigten hydraulischen Alternative könnte die Entlüftung in einen drucklosen Tank erfolgen.

im Normalfall ist über die oben gezeigte Verbindung des ersten Eingangs 18 und des Bremsdruckausgangs 37 des Anhängersteuerventilsystems 16 keine elektronische Steuerung erforderlich. Die Idee dahinter ist, dass auch in Abwesenheit des Fahrers und somit abgeschalteter Zündung (=stromloser Zustand) eine permanente Druckbeaufschlagung der Anhängerbremse 3 möglich ist.

Gemäß den Alternativen a) und b) liegt ein Sonderbetrieb vor, und zwar der Feststellbremswunsch des Fahrers, was aber durch das klemmende Ventil 6 oder 7 nicht ausgeführt werden kann. Die Bremszylinder 23 sind also nach wie vor mit Druck beaufschlagt, was durch den Drucksensor 15 ermittelt wird. Der Fahrer wird über diesen speziellen Fehler informiert und darüber, dass die Feststellbremse 24 erst eingelegt wird, wenn die Zündung abgeschaltet ist und somit der Kompressor 9.1 keine Luft mehr in die Druckmittelquelle 9 ("air tank 3") fördert. Die elektronische Steuerungseinheit 25 schaltet sich in diesem Sonderbetrieb noch nicht ab, sondern bleibt aktiv. Die elektronische Steuerungseinheit 25 ist nun in der Lage, über das Schalten des Einlassventils 34 und des Auslassventils 35 des Anhängersteuerventilsystems 16 den Druck an dem Bremsdruckausgang 37 auf und abzubauen und somit den Druck in der Druckmittelquelle 9 abzubauen. Sobald dann über einen Tankdrucksensor der Druckmittelquelle 9 ermittelt werden kann, dass der Druck so niedrig ist, dass die Federspeicher die Feststellbremsen 24 einlegen würden, kann das Bremsventil 10 einmalig betätigt werden, um den Druck in den Bremszylindern 23 abzubauen. Ein Abschalten des Bremsventils 10 führt dann aber aufgrund des niedrigen Vorratsdruckniveaus nicht zu einem erneuten Lösen bzw. Deaktivieren der Feststellbremsen 24. Ist dieser Zustand erreicht und durch den Drucksensor 15 vor den Bremszylindern bestätigt, wird die elektronische Steuerung des Anhängersteuerventilsystems 16 beendet. In diesem Fall ist die Druckmittelquelle 16 entleert. Es kann also auch kein Druck mehr an dem Bremsdruckausgang 37 ausgesteuert werden, ebenso wenig an einer Anhängerversorgungsleitung 60. Anhänger besitzen ein Anhängerbremsventil, welches bei druckloser Anhängerversorgungsleitung 60 ("roter Kupplungskopf") automatisch mit dem auf dem Anhänger 4 gespeicherten Luftvorrat in Bremsstellung geht.

Fig. 5 zeigt einen Ablauf eines Verfahrens zur Steuerung des Bremssystems nach Fig. 1, welches in einem ersten Verfahrensschritt 100 bereitgestellt wird. Mittels des Verfahrens wird eine Warnung/Information des Fahrers gewährleistet. Der Fahrer fordert in einem zweiten Verfahrensschritt 200 über die Mensch-Maschine-Schnittstelle HMI eine Aktivierung der Feststellbremsen 24 an. Da entweder das Steuerventil 6 oder das Redundanzventil 7 in geöffneter Stellung festsitzt, stehen die Federbremszylinder 23 noch unter Druck und werden nicht aktiviert, sodass die Feststellbremsen 24 nicht angezogen werden. Der Drucksensor 15, die sich in der Nähe der Federbremszylinder 23 befindet, erkennt in einem dritten Verfahrensschritt 300, dass der Druck aus den Bremszylindern 23 nicht abgelassen wird. Die elektronische Steuerungseinheit 25 des Bremssystems 1 sendet nun in einem vierten Verfahrensschritt 400 ein Warnsignal an die elektronische (Haupt-)Steuerungseinheit 27 des Zugfahrzeugs. Das Warnsignal kann beispielsweise visuell (Text- und/oder Bildanzeige auf einer Bedienoberfläche wie einem Display, ein rotes Signallicht etc.) oder akustisch sein. Das Warnsignal signalisiert dem Fahrer, dass die Feststellbremsen 24 nicht wie vorgesehen aktiviert werden können. Das Warnsignal kann darüber hinaus Anweisungen für den Fahrer enthalten, wie das Zugfahrzeug 2 sowie das Anhängefahrzeug 4 gemäß den im Folgenden beschriebenen Verfahrensschritten in einen sicheren Zustand zu bringen sind.

So wird der Fahrer in einem fünften Verfahrensschritt 500 das Zugfahrzeug 2 gemeinsam mit dem Anhängefahrzeug 4 mit aktivierter Betriebs- oder Sekundärbremsanlage zum Stehen bringen. Gleichzeitig wird der Fahrer dazu aufgefordert, den Motor des Zugfahrzeugs 2 abzuschalten, um eine kontinuierliche Luftzufuhr zum Versorgungskreis des Feststellbremsmoduls 5 zu vermeiden. Folglich wird der Fahrer in einem sechsten Verfahrensschritt 600 die Zündung des Zugfahrzeugs 2 ausschalten, sodass der Kompressor 9.1 zur Befüllung der Druckmittelquelle 9 ausgeschaltet wird. Sobald die elektronische Steuerungseinheit 25 des Bremssystems 1 erkennt, dass der Motor über die Klemme TRM15 abgestellt ist, kann die elektronische Steuerungseinheit 25 damit beginnen, den Druck in der Druckmittelquelle 9 und damit auch in den Bremszylindern 23 sowie in der Anhängerbremsanlage 3 abzubauen. Dies erfolgt - wie vorstehend beschrieben - in einem siebten Verfahrensschritt 700 indem insbesondere gemäß der Alternativen a) und b) Druckluft über das Anhängersteuerventilsystem 16 in die drucklose Umgebung U abgelassen wird. Zusätzlich oder alternativ können auch die Feststellbremsen 24 des Zugfahrzeugs 1 abwechselnd aktiviert und deaktiviert werden.

Wenn das Druckniveau in den Bremszylindern 23 den Grenzwertdruck 32 nicht länger erreicht, dann kann eine zusätzliche Fahrerinformation ausgegeben werden, dass der sichere Zustand erreicht ist. In diesem Sinne wird in einem achten Verfahrensschritt 800, wenn die Druckmittelquelle 9 derart entleert ist, dass noch in der Druckmittelquelle 9 bevorratetes Druckmittel nicht zur Deaktivierung der Feststellbremse 24 ausreicht, ein Sicherheitssignal ausgegeben, welches dem Fahrer signalisiert, dass die Feststellbremsen 24 nunmehr aktiviert sind. Der Fahrer kann dann in einem neunten Verfahrensschritt (900) das zuvor aktivierte alternative Bremssystem lösen und das Zugfahrzeug 2 verlassen.

### Bezugszeichen

- F: Filter
- HMI: Mensch-Maschine-Schnittstelle
- TRM15: Klemme Zündung
- t₁: erster Zeitpunkt
- t₂: zweiter Zeitpunkt
- t₃: dritter Zeitpunkt
- t₄: vierter Zeitpunkt
- t₅: fünfter Zeitpunkt
- U: drucklose Umgebung

- 1: Bremssystem
- 2: Zugfahrzeug
- 3: Anhängerbremse
- 4: Anhängefahrzeug
- 5: Festellbremsmodul
- 6: Steuerventil
- 7: Redundanzventil
- 8: Wechselventil
- 9: Druckmittelquelle
- 9.1: Kompressor
- 10: Bremsventil
- 11: (Zugfahrzeug-)Relaisventil
- 12: Rückschlagventil
- 13: Räder
- 14: Versorgungsleitung
- 15: Drucksensor
- 16: Anhängersteuerventilsystem
- 17: Verbindungsleitung
- 18: erster Eingang Anhängersteuerventilsystem
- 19: Steuerdruckeingang Relaisventil
- 20: Versorgungsdruckeingang Relaisventil
- 21: Druckausgang Relaisventil
- 22: Bremszylinderleitung
- 23: Bremszylinder
- 24: Feststellbremse
- 25: elektronische Steuerungseinheit
- 26: CAN BUS
- 27: elektronischen (Haupt-)Steuerungseinheit
- 28: zeitlicher Verlauf des Zustands des Steuerventils
- 29: zeitlicher Verlauf des Zustands des Redundanzventils
- 30: zeitlicher Verlauf des Zustands des Bremsventils
- 31: zeitlicher Verlauf Bremszylinderdruck
- 32: Grenzwertdruck
- 33: zeitlicher Verlauf Ausgabedruck Druckmittelquelle
- 34: Einlassventil
- 35: Auslassventil
- 36: Relaisventil
- 37: Bremsdruckausgang
- 38: Anhängersteuerleitung
- 39: Eingang Anhängersteuerventilsystem
- 40: Abrissventil
- 41: Druckeingang Anhängefahrzeug-Relaisventil
- 42: Eingang Einlassventil
- 43: Ausgang Einlassventil
- 44: Eingang Auslassventil
- 45: erster Steuereingang Anhängefahrzeug-Relaisventil
- 46: zweiter invertierter Steuereingang Anhängefahrzeug-Relaisventil
- 47: Ausgang Auslassventil
- 48: Redundanzventil Anhängersteuerventilsystem
- 49: Ablassleitung
- 50: Schalldämpfer
- 51: Steckerleiste
- 52: elektronische Steuerleitung
- 53: Druckausgang Anhängefahrzeug-Relaisventil
- 54: Schnellentlüftungsventil
- 55: erster Anschluss Schnellentlüftungsventil
- 56: zweiter Anschluss Schnellentlüftungsventil
- 57: dritter Anschluss Schnellentlüftungsventil
- 58: Kupplungskopf
- 59: T-Stück
- 60: Anhängerversorgungsleitung

- 100: Verfahrensschritt
- 200: Verfahrensschritt
- 300: Verfahrensschritt
- 400: Verfahrensschritt
- 500: Verfahrensschritt
- 600: Verfahrensschritt
- 700: Verfahrensschritt
- 800: Verfahrensschritt
- 900: Verfahrensschritt

## Patentansprüche

1. Bremssystem (1) für ein Zugfahrzeug (2), das Bremssystem (1) umfassend
- eine Druckmittelquelle (9) zur Bevorratung von unter Druck stehendem Druckmittel,
- ein Feststellbremsmodul (5) mit einem Steuerventil (6) und einem Redundanzventil (7),
- ein Anhängersteuerventilsystem (16) für eine Anhängerbremse (3) eines Anhängefahrzeugs (4), welches von dem Zugfahrzeug (2) gezogen wird, und
- eine elektronische Steuerungseinheit (25),
wobei
- das Steuerventil (6) und das Redundanzventil (7) in einem geschlossenen Zustand mechanisch vorgespannt sind,
- die elektronische Steuerungseinheit (25) dazu eingerichtet ist,
- das Steuerventil (6) und das Redundanzventil (7) derart zu steuern, dass sie sich entgegen der mechanischen Vorspannung in einen geöffneten Zustand begeben, sodass Druckmittel aus der Druckmittelquelle (9) in einen Bremszylinder (23) des Zugfahrzeugs (2) geleitet wird, um in dem Bremszylinder (23) einen Deaktivierungsdruck aufzubauen, sodass eine Parksperre (24) des Zugfahrzeugs (2) deaktiviert wird, und
- das Anhängersteuerventilsystem (16) derart zu steuern, dass Druckmittel über das Anhängersteuerventilsystem (16) in eine drucklose Umgebung (U) entweicht, wodurch die Druckmittelquelle (9) entleert wird, wenn das Steuerventil (6) oder das Redundanzventil (7) aufgrund eines mechanischen Defekts in dem geöffneten Zustand verharrt, obwohl es sich in dem geschlossenen Zustand befinden sollte, und wenn eine Zündung des Zugfahrzeugs (2) und damit auch ein Kompressor (9.1) zur Befüllung der Druckmittelquelle (9) ausgeschaltet sind.

2. Bremssystem (1) nach Anspruch 1, wobei die elektronische Steuerungseinheit (25) dazu eingerichtet ist, das Anhängersteuerventilsystem (16) derart zu steuern, dass ein Bremsdruckausgang (37) für eine Anhängersteuerleitung (38), welche die Anhängerbremse (3) mit Druckmittel versorgt, mit Unterbrechungen mit Druck beaufschlagt wird.

3. Bremssystem (1) nach Anspruch 2, wobei
- die Anhängersteuerleitung (38) mit dem Bremsdruckausgang (37) und mit der Anhängerbremse (3) verbunden ist, und
- die elektronische Steuerungseinheit (25) dazu eingerichtet ist, das Anhängersteuerventilsystem (16) derart zu steuern, dass die Anhängerbremse (3) abwechselnd aktiviert und deaktiviert wird, um die Druckmittelquelle (9) über das Anhängersteuerventilsystem (16) zu entleeren.

4. Bremssystem (1) nach Anspruch 3, wobei
- das Anhängersteuerventilsystem (16) ein Einlassventil (34), ein Auslassventil (35) und ein Anhängefahrzeug-Relaisventil (36) umfasst,
- die Druckmittelquelle (9) mit dem Einlassventil (34) und mit dem Anhängefahrzeug-Relaisventil (36) verbunden ist,
- das Einlassventil (34) in einem geschlossenen Zustand mechanisch vorgespannt ist,
- das Auslassventil (35) in einem geöffneten Zustand mechanisch vorgespannt ist,
- die elektronische Steuerungseinheit (25) dazu eingerichtet ist, das Einlassventil (34) und das Auslassventil (35) derart zu steuern, dass zur Aktivierung der Anhängerbremse (3) das Einlassventil (34) in einen geöffneten Zustand und das Auslassventil (35) gleichzeitig in einen geschlossenen Zustand versetzt wird, wodurch das Einlassventil (34) unter einem Steuerdruck stehendes Druckmittel an das Anhängefahrzeug-Relaisventil (36) ausgibt, welches basierend auf dem Steuerdruck unter einem Bremssteuerdruck stehendes Druckmittel in die Anhängersteuerleitung (38) zur Aktivierung der Anhängerbremse (3) ausgibt.

5. Bremssystem (1) nach Anspruch 4, wobei die elektronische Steuerungseinheit (25) zur Deaktivierung der Anhängerbremse (3) dazu eingerichtet ist, das Einlassventil (34) in den geschlossenen Zustand und das Auslassventil (35) in den geöffneten Zustand zu versetzen, wodurch das Einlassventil (34) keinen Steuerdruck an das Anhängefahrzeug-Relaisventil (36) ausgibt und Druckmittel aus der Anhängersteuerleitung (38) über das Anhängefahrzeug-Relaisventil (36) in die drucklose Umgebung (U) entweicht.

6. Bremssystem (1) nach Anspruch 5, wobei die elektronische Steuerungseinheit (25) dazu eingerichtet ist, das Aktivieren und Deaktivieren der Anhängerbremse (3) zyklisch zu wiederholen, um die Druckmittelquelle (9) zu entleeren.

7. Bremssystem (1) nach Anspruch 1, wobei die elektronische Steuerungseinheit (25) dazu eingerichtet ist, das Einlassventil (34) und das Auslassventil (35) derart zu steuern, dass das Einlassventil (34) und das Auslassventil (35) in den geöffneten Zustand versetzt werden, sodass kontinuierlich Druckmittel aus der Druckmittelquelle (9) über das Einlassventil (34) und über das Auslassventil (35) in die drucklose Umgebung (U) entweicht.

8. Bremssystem (1) nach einem der vorstehenden Ansprüche, das Bremssystem (1) weiterhin umfassend ein Rückschlagventil (12), wobei
- das Rückschlagventil (12) zwischen der Druckmittelquelle (9) einerseits und dem Bremszylinder (23) andererseits angeordnet und eine Strömung von Druckmittel aus dem Bremszylinder (23) in Richtung der Druckmittelquelle (9) verhindert,
- die elektronische Steuerungseinheit dazu eingerichtet ist, das Bremsventil (10) derart zu steuern, dass es sich in einen geschlossenen Zustand begibt, nachdem die Druckmittelquelle (9) ausreichend entleert worden ist, wodurch Druckmittel aus dem Bremszylinder (23) über das Bremsventil (10) direkt in die drucklose Umgebung (U) entweicht, bis der Bremszylinder (23) derart entleert worden ist, dass die Feststellbremse (24) aktiviert wird.

9. Bremssystem (1) nach einem der vorstehenden Ansprüche, wobei
- die elektronische Steuerungseinheit (25) zur Entleerung der Druckmittelquelle (9) dazu eingerichtet ist, das Bremsventil (10) derart zu steuern, dass es sich abwechselnd in einen geschlossenen Zustand und in den geöffneten Zustand begibt, wenn das Steuerventil (6) oder das Redundanzventil (7) aufgrund eines mechanischen Defekts in dem geöffneten Zustand verharrt, obwohl es sich in dem geschlossenen Zustand befinden sollte, und wenn die Zündung des Zugfahrzeugs (2) und damit auch der Kompressor (9.1) zur Befüllung der Druckmittelquelle (9) ausgeschaltet sind.

10. Bremssystem (1) nach einem der Ansprüche 2 bis 9, das Bremssystem (1) weiterhin umfassend ein Schnellentlüftungsventil (54), wobei das Schnellentlüftungsventil (54) dazu eingerichtet ist, Druckmittel aus dem Bremszylinder (23) und/oder der Anhängersteuerleitung (38) direkt in die drucklose Umgebung (U) abzulassen.

11. Bremssystem (1) nach einem der Ansprüche 4 bis 10, wobei das Steuerventil (6) und das Redundanzventil (7) Druckmittel an das Anhängefahrzeug-Relaisventil (36) ausgeben, wenn sich das Steuerventil (6) und das Redundanzventil (7) in dem geöffneten Zustand befinden, sodass das Anhängefahrzeug-Relaisventil (36) kein Druckmittel in die Anhängersteuerleitung (38) ausgibt und die Anhängerbremse (3) nicht aktiviert wird.

12. Verfahren zu Steuerung eines Bremssystems (1), das Verfahren umfassend die Schritte:
(100) Bereitstellen eines Bremssystems (1) nach einem der vorstehenden Ansprüche,
(200) Anfordern eine Aktivierung der Feststellbremse (24) durch einen Fahrer des Zugfahrzeugs (2) mittels einer Mensch-Maschine-Schnittstelle (HMI),
(300) Erkennen, dass das Steuerventil (6) oder das Redundanzventil (7) aufgrund eines mechanischen Defekts in dem geöffneten Zustand verharrt, obwohl es sich in dem geschlossenen Zustand befinden sollte, durch Auswertungen von Druckwerten eines Drucksensors (15), welcher in der Nähe des Bremszylinders (23) angeordnet ist,
(400) Ausgabe eines Warnsignals, welches dem Fahrer signalisiert, dass die Feststellbremse (24) nicht wie vorgesehen aktiviert werden kann,
(500) Anhalten des Zugfahrzeugs (2) durch Betätigung einer Betriebs- oder Sekundärbremsanlage,
(600) Ausschalten einer Zündung des Zugfahrzeugs, sodass der Kompressor (9.1) zur Befüllung der Druckmittelquelle (9) ausgeschaltet wird, und
(700) Steuern des Anhängersteuerventilsystems derart, dass Druckmittel über das Anhängersteuerventilsystem in die drucklose Umgebung (U) entweicht, und/oder Steuern des Bremsventils (10) derart, dass es sich abwechselnd in einen geschlossenen Zustand und in den geöffneten Zustand begibt, wodurch die Druckmittelquelle (9) entleert wird.

13. Verfahren nach Anspruch 12, das Verfahren weiterhin umfassend die Schritte
(800) Ausgabe eines Sicherheitssignals, welches dem Fahrer signalisiert, dass die Feststellbremse nunmehr aktiviert ist, wenn die Druckmittelquelle (9) derart entleert ist, dass noch in der Druckmittelquelle (9) bevorratetes Druckmittel nicht zur Deaktivierung der Feststellbremse (24) ausreicht, und
(900) Stoppen der Betätigung der Betriebs- oder Sekundärbremsanlage.
